# EUROPÄISCHE PATENTSCHRIFT

(11) **EP 2 201 845 B1**
(45) Veröffentlichungstag und Bekanntmachung des Hinweises auf die Patenterteilung: **04.04.2012**
(21) Anmeldenummer: 08022276.3
(22) Anmeldetag: 22.12.2008
(51) Int. Cl.: A23L 1/00, A23G 3/00, A23G 3/26, A23L 1/164, A23L 1/18, A23L 1/212, A23L 1/36, A23P 1/08

(54) **Verfahren zum Ummanteln von Lebensmittelkernen**
Method for sheathing food cores
Procédé d'enrobage de noyaux d'aliments

(43) Veröffentlichungstag der Anmeldung: 30.06.2010
(73) Patentinhaber: Lorenz Bahlsen Snack-World Holding GmbH&Co. KG, 63263 Neu-Isenburg (DE)
(72) Erfinder: Amman, Martin, 60598 Frankfurt am Main (DE); Weber, Bernd, 5440 Golling a.d. Salzach (AT); Schmitt, Joachim Dr., 63768 Hösbach (DE)
(74) Vertreter: Glawe, Delfs, Moll

(56) Entgegenhaltungen:
- EP-A- 0 841 012
- WO-A-95/01730
- FR-A- 2 691 879
- JP-A- 62 259 543
- US-A- 4 512 247
- US-A- 4 931 304
- US-A- 5 093 139
- US-A1- 2002 160 083

## Beschreibung

Die Erfindung betrifft ein Verfahren zum Ummanteln von Lebensmittelkernen bei erhöhter Temperatur mit essbaren Überzügen, die beim Aufbringen auf die Lebensmittelkerne bei erhöhten Temperaturen an den Lebensmittelkernen haften und eine bei Zimmertemperatur feste Ummantelung bilden.

Verfahren zum Ummanteln von Lebensmitteln sind aus dem Stand der Technik bekannt, beispielsweise das Überziehen von Mandeln mit in Trägeröl gelösten Aromastoffen (US-A-4 931 304), das. Ummanteln von Sonnenblumenkernen mit einer Lösung aus Aromastoffen (US-A-5 093 139), das Ummanteln von Popcorn mit einem Überzug aus Süßwaren (US-A-4 512 247), das Ummanteln von Erdnüssen mit einem Überzug aus Aromastoffen oder Farbstoffen (EP-A-0 841 012), das Ummanteln von Mandeln mit weiser Schokolade (JP 62 259543 A), das Ummanteln von extrudierten Teigmassen mit Stoffen wie Rapsöl oder Aromen (FR-A-2 691 879), das Ummanteln von gekochten Süßigkeiten mit einem essbaren Sirup (US 2002/160083 A1) oder das Ummanteln von Extrudaten mit einem Überzug aus Öl, Farb- oder Aromastoffen (WO 95/01730 A).

Die Ummantelung von Lebensmitteln mit essbaren Stoffen ist eine seit langem bekannte Technik und hat im Wesentlichen drei verfahrenstechnische Ausprägungen. Diese Ausprägungen sind die Befilmung, die Dragierung und das "Brennen" von Lebensmitteln.

Von Befilmung spricht man, wenn der Überzug über das Lebensmittel so dünn ist, dass er weder das Volumen des überzogenen Kerns des Lebensmittels wesentlich vergrößert noch die Form des Kerns entscheidend verändert. Die Befilmung ist ein relativ schnelles Überzugsverfahren und geschieht in der Regel durch einem einmaligen Auftrag der entsprechenden Überzugssubstanz. Die Befilmung kann daher im Zeitrahmen von Minuten durchgeführt werden.

Das zweite Verfahren zur Ummantelung von Lebensmitteln ist die so genannte Dragierung. Bei diesem Verfahren werden mehrere Schichten des Überzugmaterials nacheinander aufgebracht. Dadurch vergrößern sich das Volumen und die Form des Kerns des Lebensmittels. Aufgrund des mehrmaligen Auftragens einer Überzugsmasse auf den Kern des Lebensmittels kann die Dragierung bis zu mehreren Stunden in Anspruch nehmen.

Bei beiden Auftragstechniken wird in der Regel die Auftragsmasse (z. B. eine Schokoladenmasse) vor dem Auftragen erwärmt, damit sie beim Abkühlen auf dem kühleren Kern des Lebensmittels haften bleibt (Heißdragieren). Im Gegensatz dazu wird beim so genannten Kaltdragieren eine Auftragsmasse, z. B. eine Zuckerlösung, bei normaler Zimmertemperatur aufgetragen und durch Trocknungsprozesse and den Lebensmittelkern fixiert. In beiden Fällen wird die Auftragsmasse in der Regel als ein flüssiges Gemisch mit Wasser appliziert.

Das eingangs genannte dritte Verfahren besteht darin, die Lebensmittelkerne über die Erhitzung der Dragiertrommel heiß zu machen und dann mit Zucker zu bestreuen (z. B. Herstellung von so genannten "gebrannten" Mandeln). Bei dieser Überziehungsmethode karamellisiert der Zucker auf den Lebensmittelkernen, jedoch auch auf der heißen Trommelwand. Durch das dabei entstehende Verkleben der Trommelwand entstehen technologische Probleme, wie z. B. die Bildung einer Haftschicht auf der Trommelwand oder die Bildung von Klumpen aus karamellisiertem Zucker.

Die Aufgabe der Erfindung besteht in der Schaffung eines Verfahrens der eingangs genannten Art, mit dem die Lebensmittelkerne schnell und auch im großtechnischen Einsatz umwandelt werden können, wobei das erwähnte Verkleben der Vorrichtung oder Klumpenbildung zumindest sehr stark verringert werden.

Die erfindungsgemäße Lösung besteht in der Bereitstellung eines Verfahrens gemåß Anspruch 1.

Die geschilderten Nachteile aller drei bekannten Verfahren werden durch das erfindungsgemäße Verfahren minimiert und/oder vermieden. Das Wesen des neuen Verfahrens liegt in der Erhitzung des Lebensmittelkernes durch Heißluft. Dadurch werden wesentliche Vorteile gegenüber bisherigen Verfahren erzielt. Das neue Verfahren erleichtert den großtechnischen Einsatz bei der Ummantelung. Es handelt es sich bei dem erfindungsgemäßen Verfahren weder um eine klassische Befilmung noch um eine klassische Dragierung von Nahrungsmittelkernen, weil es mit seiner Produktausprägung zwischen den Charakteristiken beider Techniken liegt.

Mit dem erfindungsgemäßen Verfahren ist es ohne weiteres möglich, Ummantelungen herzustellen, die genügend dick sind, dass sie deutlich erkennbar sind und die Form des Lebensmittels zwar beeinflussen, ohne sie jedoch bis zur Unkenntlichkeit zu verändern.

Diese Anforderungen konnten überraschenderweise dadurch erfüllt werden, dass nicht wie bisher, die Auftragsmasse sonder vielmehr der Kern des Lebensmittels erwärmt wird. Dies geschieht erfindungsgemäß nicht wie bei bisherigen Techniken durch die Erwärmung der Dragiertrommel, sondern durch die die Erwärmung des Lebensmittelkernes direkt durch die Anwendung eines heißen Luftstromes. Da bei diesem erfindungsgemäßen Verfahren die technische Unterlage des Lebensmittelkerns (beispielsweise eine Dragiertrommel, ein sich drehender Auftragstunnel oder ein Transportband) nicht entscheidend erwärmt wird, sondern bei Bedarf sogar gekühlt werden kann, konzentrieren sich die folgenden Behandlungen überwiegend auf den Lebensmittelkern und nicht auf dessen Träger.

Durch die Erwärmung des Lebensmittelkerns ergibt sich bei geeigneten Lebensmitteln eine Oberfläche, auf der bestimmte flüssig oder pulverförmig aufgebrachte Überzugsmaterialen gelieren, kristallisieren, schmelzen und/oder karamellisieren können und somit auf dem Kern fixiert werden. Dies geschieht mittels eines einstufigen Auftragsverfahrens im Minutenbereich (wie bei einer Befilmung), verändert jedoch bei entsprechender Auftragsmenge die Form des Lebensmittelkernes (wie bei einer Dragierung). Zudem bildet sich keine oder nur minimale Haftung des Auftragsstoffes auf dem technischen Träger des Lebensmittelkerns (wie bei dem "Brennen" von Lebensmittelkernen). Das neue Verfahren vereint somit die Vorteile der drei bisherigen Verfahren, ohne deren Nachteile zu übernehmen und ist dadurch keinem der bisherigen Verfahren zuordenbar.

Eine Ausführungsform zeichnet sich dadurch aus, dass die Lebensmittelkerne in einer Dragiertrommel mit der Heißluft erwärmt werden, wobei die Dragiertrommel auf einer Temperaturen gehalten wird, die niedriger ist als die Temperatur, bei der die Überzugsmaterialien zu schmelzen beginnen.

Bei einer anderen Ausführungsform ist vorgesehen, dass die Lebensmittelkerne auf einem temperaturbeständigen Transportband und/oder Gitter, insbesondere aus Metall oder beschichtetem Gewebe mit der Heißluft erwärmt werden, wobei das Transportband und/oder Gitter auf einer Temperaturen gehalten wird, die niedriger ist als die Temperatur, bei der die Überzugsmaterialien zu schmelzen beginnen.

Vorteilhafterweise ist vorgesehen, dass eine Dragiertrommel bzw. ein Transportband und/oder Gitter verwendet wird, das mit einer Antihaftbeschichtung, insbesondere PTFE (Polytetrafluorethylen) versehen ist, wodurch das mögliche Anhaften der Überzugsmaterialien an diesen Vorrichtungsteilen weiter vermindert wird.

Wenn eine Dragiertrommel bzw. ein Transportband und/oder Gitter verwendet wird, die bzw. das mit einer Flüssigkeitskühlung versehen ist, kann eine Erwärmung durch die erhitzte Luft und/oder die erwärmten Lebensmittel wirksam verhindert werden.

Wenn die mit der Ummantelung versehenen Lebensmittel mit Luft gekühlt werden, erstarrt der Überzug schneller, so dass schneller die Weiterverarbeitung oder der Weitertransport stattfinden kann.

Das Verfahren kann durch Energierückgewinnung besonders wirtschaftlich betrieben werden, wenn die Abwärme des Kühlmediums für die Aufheizung der Heißluft ausgenutzt wird.

### Beispiele

### a) Überziehen von Nüssen und Nussstücken:

Nusskerne oder Stücke davon werden in einer Dragiertrommel mittels eines heißen Luftstromes auf 126°C erhitzt. Auf die heißen Nusskerne wird ein trockenes, pulverförmiges Karamellisierungsgemisch aus Zucker, Glukose, Glukosesirup, Fett und anderen Stoffen (beispielsweise ein als so genannte "Florentinermischung" bekanntes Instantzuckergemisch) aufgestreut. Durch die Oberflächentemperatur der Nusskerne karamellisiert die Zuckermischung und bildet eine durchgängige Ummantelung der Nusskerne und Nussstücke. Die Ummantelung ist dabei dicker als nur ein dünner Filmüberzug und wächst auf bis zu 20% des Gewichtes der Nusskerne an. Nach Erreichen dieser gut sichtbaren Ummantelung wird der Heißluftstrom gestoppt, wodurch sich die Oberfläche der Ummantelung abkühlt und kein weiterer Zucker mehr aufgenommen und karamellisiert wird.

### b) Überziehen von Soja-Kernen:

Getrocknete und geröstete Soja-Bohnen werden mit Heißluft erhitzt und mit einer Zuckerlösung besprüht. Diese karamellisiert auf den heißen Sojabohnen und überzieht die Kerne auf diese Weise mit einer deutlich sichtbaren, attraktiv glänzenden, bräunlichen Schicht, die die Sojabohnen für den Verkauf veredelt.

### c) Überziehen von getrockneten Hartextrudaten (Pellets und/oder Collets):

Trockene Extrudate, so genannte Pellets, werden nach der Aufröstung mittels eines heißen Luftstroms auf einer hohen Temperatur gehalten und in noch heißem Zustand mit einer Zuckerlösung besprüht. Diese karamellisiert auf den heißen Extrudaten und überzieht diese auf diese Weise mit einer attraktiv glänzenden, braunen Schicht, die aufträgt und deutlich sichtbar ist.

### d) Ummantelung von getrockneten Früchten und Fruchtstücken:

Getrocknete Früchte, wie beispielsweise getrocknete Bananen, Apfelringe und Cranberries und/oder Stücke davon, werden in einem heißen Luftstrom auf 130°C erhitzt und mit einem zuckerhaltigen Instantpulver bestreut. Dieses Pulver verflüssigt sich und karamellisiert auf der Oberfläche der Fruchtstücke und überzieht sie mit einem braunen Überzug, der nach Erkalten ein Zusammenkleben der Früchte minimiert.

### e) Ummantelung von Gemüse und Gemüsestücken:

Getrocknete Gemüse und Gemüsestücke, wie beispielsweise Kartoffeln, Kartoffelscheiben oder sonstige Stücke von Kartoffeln, Süßkartoffeln, Cassava, Jams, Taro, Karotten, Rettich, Schwarzwurzel und andere Gemüsearten, werden in einem heißen Luftstrom auf 130°C erhitzt und mit einem zuckerhaltigen Instantpulver bestreut. Dieses Pulver verflüssigt sich und karamellisiert auf der Oberfläche der Gemüsestücke und überzieht sie mit einem auftragenden Überzug, der den Geschmack der Gemüse oder Gemüsestücke verfeinert.

### f) Ummantelung von gebackenen Lebensmittelkernen:

Die Oberfläche von aus Teigen gebackene Lebensmittelkernen wird nach dem Backvorgang mit Heißluft erhitzt und mit einer Zuckerlösung besprüht. Diese karamellisiert auf der heißen Oberfläche des gebackenen Lebensmittelkernes und überzieht ihn auf diese Weise mit einer attraktiven, bräunlichen Schicht, die den Kern für den Verkauf veredelt.

### g) Dotieren von Kartoffelchips und anderen Gemüsescheiben:

Geröstete oder getrocknete Gemüse oder Kartoffelscheiben werden mittels Heißluft auf eine Temperatur von 130°C erhitzt und unregelmäßig mit einem Instantzuckergemisch bestreut. Durch die Oberflächentemperatur der Chips karamellisiert der Zucker auf der Chipoberfläche und ergibt unregelmäßig braune Areale, die für bestimmte Produktauslobungen erwünscht sein können.

## Patentansprüche

1. Verfahren zum Ummanteln von Lebensmittelkernen bei erhöhter Temperatur mit essbaren Überzügen, die beim Aufbringen auf die Lebensmittelkerne bei erhöhten Temperaturen an den Lebensmittelkernen haften und eine bei Zimmertemperatur feste Ummantelung bilden, **dadurch gekennzeichnet, dass** pulverförmige Überzugmaterialien verwendet werden und dass die Lebensmittelkerne in einer Dragiertrommel bzw. auf einem temperaturbeständigen Transportband und/oder Gitter mit Heißluft so stark erwärmt werden, dass die anschließend aufgebrachten Überzugsmaterialien bei Kontakt mit den Lebensmittelkernen an diesem haften bleiben, wobei die Dragiertrommel bzw. das Transportband und/oder Gitter auf einer Temperatur gehalten wird, die niedriger ist als die Temperatur, bei der sich die Überzugmaterialien zu verändern beginnen.

2. Verfahren nach Anspruch 1, **dadurch gekennzeichnet, dass** die Lebensmittelkerne auf einem temperaturbeständigen Transportband und/oder Gitter aus Metall oder beschichtetem Gewebe mit der Heißluft erwärmt werden.

3. Verfahren nach Anspruch 1 oder 2, **dadurch gekennzeichnet, dass** die durch die erhöhte Temperatur bewirkte Veränderung der Überzugmaterialien Gelieren, Kristallisieren, Schmelzen und/oder Karamellisieren sind.

4. Verfahren nach einem der Ansprüche 1 bis 3, **dadurch gekennzeichnet, dass** eine Dragiertrommel bzw. ein Transportband und/oder Gitter verwendet wird, die bzw. das mit einer Antihaftbeschichtung, insbesondere PTFE (Polytetrafluorethylen) versehen ist.

5. Verfahren nach einem der Ansprüche 1 bis 4, **dadurch gekennzeichnet, dass** eine Dragiertrommel bzw. ein Transportband und/oder Gitter verwendet wird, das mit einer Flüssigkeitskühlung versehen ist.

6. Verfahren nach einem der Ansprüche 1 bis 5, **dadurch gekennzeichnet, dass** die mit der Ummantelung versehenen Lebensmittel mit Luft gekühlt werden.

7. Verfahren nach Anspruch 5 oder 6, **dadurch gekennzeichnet, dass** die Abwärme des Kühlmediums für die Aufheizung der Heißluft ausgenutzt wird.

8. Verfahren nach einem der Ansprüche 1 bis 7, **dadurch gekennzeichnet, dass** die Lebensmittelkerne ganze und/oder Teile von essbaren Kernen von echten und/oder so genannten Nüssen, wie Walnüsse, Macadamianüsse, Haselnüsse, Cashewnüsse, Pecannüsse, Mandeln, Pistazien, Erdnüsse und anderer Nüsse oder als Nüsse bezeichneten Früchte oder Teile davon sind.

9. Verfahren nach einem der Ansprüche 1 bis 7, **dadurch gekennzeichnet, dass** die Lebensmittelkerne ganze und/oder Teile von essbaren Samen von Pflanzen, wie geröstete und/oder getrocknete und/oder frische Sojasamen, bohnen, Erbsen, Kichererbsen, und sonstige Hülsenfrüchte sowie naturbelassene und/oder vorbehandelte (insbesondere gepoppt, expandiert, extrudiert, flockiert) Samen von Getreiden aller Art (insbesondere Weizen, Gerste, Hafer, Roggen, Hirse, Buchweizen, Emmer, Einkorn, Kamuth, Mais, Reis, Amaranth, Quinoa) sowie andere überziehbare Samen (insbesondere von Raps, Alfaalfa, etc.) sind.

10. Verfahren nach einem der Ansprüche 1 bis 7, **dadurch gekennzeichnet, dass** die Lebensmittelkerne frische und/oder getrocknete Früchte aller Art sind, insbesondere getrocknete Bananen, Aprikosen, Cranberries, Heidelbeeren, Physalis und Trauben.

11. Verfahren nach einem der Ansprüche 1 bis 7, **dadurch gekennzeichnet, dass** die Lebensmittelkerne Gemüse aller Art oder Teile davon sind insbesondere Kartoffeln, Kartoffelscheiben oder sonstige Stücke von Kartoffeln, Süßkartoffeln, Cassava, Jams, Taro, Karotten, Rettich und Schwarzwurzel.

12. Verfahren nach einem der Ansprüche 1 bis 7, **dadurch gekennzeichnet, dass** die Lebensmittelkerne aus extrudierten Teigmassen bestehen d.h so genannte Pellets und/oder Collets, vor und/oder nach der Aufröstung.

13. Verfahren nach einem der Ansprüche 1 bis 7, **dadurch gekennzeichnet, dass** die Lebensmittelkerne aus gebackenen Teigmassen oder Teilen davon bestehen.

## Claims

1. Method for covering foodstuff cores at elevated temperature with edible coatings, which when applied to the foodstuff cores at elevated temperatures adhere to the foodstuff cores and form a covering that is solid at room temperature, **characterised in that** powdered coating materials are used and that the foodstuff cores are heated so strongly with hot air in a coating drum or on a heat-resistant conveyor belt and/or grid that the subsequently applied coating materials on contact with the foodstuff cores remain adhering to the latter, the coating drum or the conveyor belt and/or grid being maintained at a temperature that is lower than the temperature at which the coating materials begin to change.

2. Method according to claim 1, **characterised in that** the foodstuff cores are heated with the hot air on a temperature-resistant conveyor beit and/or grid of metal or coated textile fabric.

3. Method according to claim 1 or 2, **characterised in that** the change in the coating materials caused by the elevated temperature includes gelling, crystallisation, melting and/or caramelisation.

4. Method according to one of claims 1 to 3, **characterised in that** a coating drum or a conveyor belt and/or grid is used, which is provided with a non-stick coating, in particular of PTFE (polytetrafluoroethylene).

5. Method according to one of claims 1 to 4, **characterised in that** a coating drum or a conveyor belt and/or grid is used that is provided with a liquid cooling system.

6. Method according to one of claims 1 to 5, **characterised in that** the foodstuff provided with the covering is cooled with air.

7. Method according to claim 5 or 6, **characterised in that** the waste heat from the coolant is used to heat the hot air.

8. Method according to one of claims 1 to 7, **characterised in that** the foodstuff cores are whole edible kernels and/or parts of edible kernels of real and/or so-called nuts, such as walnuts, macadamia nuts, hazel nuts, cashew nuts, pecan nuts, almonds, pistachios, groundnuts and other nuts or fruits or parts thereof classed as nuts.

9. Method, according to one of claims 1 to 7, **characterised in that** the foodstuff cores are whole edible seeds and/or parts of edible seeds of plants, such as roasted and/or dried and/or fresh soya bean seeds, beans, peas, chick-peas and other legumes, as well as untreated and/or pre-treated (in particular popped, expanded, extruded, flaked) seeds of all types of cereals (in particular wheat, barley, oats, rye, millet, buckwheat, emmer, spelt wheat, kamut, corn, rice, amaranth, quinoa) as well as other coatable seeds (in particular rapeseed, alfalfa, etc.).

10. Method according to one of claims 1 to 7, **characterised in that** the foodstuff cores are fresh and/or dried fruits of all types, in particular dried bananas, apricots, cranberries, bilberries, physalis and grapes.

11. Method according to one of claims 1 to 7, **characterised in that** the foodstuff cores are vegetables of all types or parts thereof, in particular potatoes, potato slices or other parts of potatoes, sweet potatoes, cassava, jams, taro, carrots, radishes and black salsify.

12. Method according to one of claims 1 to 7, **characterised in that** the foodstuff cores consist of extruded doughs, i.e. so-called pellets and/or collets, before and/or after roasting.

13. Method according to one of claims 1 to 7, **characterised in that** the foods tuff cores consist of baked doughs or parts thereof.

## Revendications

1. Procédé d'enrobage de noyaux d'aliments à température élevée, avec des revêtements comestibles qui adhèrent aux noyaux d'aliments lors de l'application sur les noyaux d'aliments à températures élevées et forment un enrobage solide à température ambiante, **caractérisé en ce que** des matériaux de revêtement pulvérulents sont utilisés et **en ce que** les noyaux d'aliments sont fortement chauffés dans un tambour de pastillage ou sur un tapis de transport résistant à la température et/ou une grille avec de l'air chaud, de telle sorte que les matériaux de revêtement appliqués ensuite restent collés à celui-ci lors du contact avec les noyaux d'aliments, le tambour de pastillage ou le tapis de transport et/ou la grille étant maintenu (e) à une température qui est inférieure à la température à laquelle les matériaux de revêtement commencent à se modifier.

2. Procédé selon la revendication 1, **caractérisé en ce que** les noyaux d'aliments sont chauffés à l'air chaud sur un tapis de transport résistant à la température et/ou une grille de métal ou des tissus enduits.

3. Procédé selon la revendication 1 ou 2, **caractérisé en ce que** la modification des matériaux de revêtement induite par la température élevée comprend la gélification, la cristallisation, la fusion et/ou la caramélisation.

4. Procédé selon l'une des revendications 1 à 3, **caractérisé en ce que** sont utilisés un tambour de pastillage ou un tapis de transport et/ou une grille qui est doté(e) d'un revêtement antiadhésif, en particulier de PTFE (polytétrafluoro-éthylène).

5. Procédé selon l'une des revendications 1 à 4, **caractérisé en ce que** sont utilisés un tambour de pastillage ou un tapis de transport et/ou une grille qui est doté(e) d'un dispositif de refroidissement par liquide.

6. Procédé selon l'une des revendications 1 à 5, **caractérisé en ce que** l'aliment doté de l'enrobage est refroidi à l'air.

7. Procédé selon la revendication 5 ou 6, **caractérisé en ce qu'**est utilisée la chaleur émise du milieu de refroidissement pour chauffer l'air chaud.

8. Procédé selon l'une des revendications 1 à 7, **caractérisé en ce que** les noyaux d'aliments sont des noyaux entiers et/ou des parties de noyaux comestibles de noix véritables et/ou produits de type noix tels que les noix, les noix de macadamia, les noisettes, les noix de cajou, les noix de pécan, les amandes, les pistaches, les cacahuètes et autres noix ou fruits désignés comme noix, ou leurs parties.

9. Procédé selon l'une des revendications 1 à 7, **caractérisé en ce que** les noyaux d'aliments sont des graines comestibles entières et/ou des parties de graines comestibles telles que des graines de soja, des haricots, des pois, des pois chiches, torréfiés et/ou séchés et/ou frais, et autres légumineuses et des graines naturelles et/ou prétraitées (en particulier, éclatées, expansées, extrudées, floquées) de céréales de toutes sortes (en particulier, blé, orge, avoine, seigle, millet, sarrasin, blé amidonnier, engrain, kamut, maïs, riz, amarante, quinoa) et d'autres graines pouvant être revêtues (en particulier de colza, d'alfalfa, etc.).

10. Procédé selon l'une des revendications 1 à 7, **caractérisé en ce que** les noyaux d'aliments sont des fruits frais et/ou secs de toutes sortes, en particulier, des bananes, des abricots, des canneberges, des myrtilles, de l'alkékenge et des raisins, secs,

11. Procédé selon l'une des revendications 1 à 7, **caractérisé en ce que** les noyaux d'aliments sont des légumes de toutes sortes ou des parties de ceux-ci, en particulier, des pommes de terre, des chips de pomme de terre, ou d'autres morceaux de pomme de terre, de patate douce, de manioc, de jam, de taro, de carottes, de raves et de salsifis noir.

12. Procédé selon l'une des revendications 1 à 7, **caractérisé en ce que** les noyaux d'aliments consistent en des masses de pâte extrudée c'est-à-dire des produits de type pastilles et/ou collets avant et/ou après la torréfaction.

13. Procédé selon l'une des revendications 1 à 7, **caractérisé en ce que** les noyaux d'aliments consistent en une masse de pâte cuite ou en des parties de celle-ci.
